(19) Europäisches Patentamt / European Patent Office / Office européen des brevets

(11) **EP 2 607 159 B1**

(12) **EUROPEAN PATENT SPECIFICATION**

(45) Date of publication and mention
of the grant of the patent:
**23.01.2019  Bulletin 2019/04**

(51) Int Cl.:
**B60P 1/04** *(2006.01)*       **B62D 37/04** *(2006.01)*

(21) Application number: **11194787.5**

(22) Date of filing: **21.12.2011**

(54) **Method and device for balancing the loads on the wheels of an industrial vehicle**

Verfahren und Vorrichtung zum Ausgleich der Belastungen an den Rädern eines Industriefahrzeugs

Procédé et dispositif pour équilibrer les charges sur les roues d'un véhicule industriel

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.06.2013  Bulletin 2013/26**

(73) Proprietor: **Astra Veicoli Industriali S.p.A.**
**29100 Piacenza (IT)**

(72) Inventors:
• **Benetti, Antonio**
 **25010 San Zeno Naviglio (IT)**
• **Nessi, Marco**
 **24020 Ranica (IT)**

(74) Representative: **Franzolin, Luigi et al**
**Studio Torta S.p.A.**
**Via Viotti, 9**
**10121 Torino (IT)**

(56) References cited:
WO-A1-2006/046903     DE-A1- 3 208 315
DE-A1- 10 353 026     DE-A1-102004 038 471
DE-A1-102009 035 525     FR-A3- 2 925 447

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>Application field of the invention</u>

The present invention refers to the field of the systems for balancing the loads weighing on the wheels of industrial vehicles and in particular of the so-called "ballast tractors" intended to be used to pull exceptional loads.

<u>Description of the prior art</u>

Exceptional transport vehicles, namely vehicles intended to transport particularly large and/or heavy loads, have often tractor-trailer configurations wherein the tractor is loaded with a ballast and is usually called "ballast tractor" whose mass allows to reach the limits of maximum allowed load on the different axles of the tractor on a plane road.
The trailer is connected to the tractor by means of a connection bar allowing a certain articulation which make it possible to compensate the relative movements between tractor and trailer.
Problems may occur when travelling on roads with steep slopes.
In particular some axles may be dangerously overloaded, consequently reducing the load on the remaining axles. In certain situations such load variations may break the components of the vehicle's driveline. Having higher loads on the axles, indeed, means having a higher capacity to "discharge" to the ground the available driving/braking torque, applied to the driveline with possible 'extra torques' on the components of the driveline itself, while a reduction of the load on the driving axles, may generate a wheel slip due to the lack of grip, and thus a centrifugation of the components of the transmission.
When the exceptional transport convoy travels on an uphill ground, the distribution of the loads on the tractor axles is affected by the slope of the road. In this condition load increases on the rear axles, while it decreases on the front axle of the vehicle. This implies a loss of the directionality of the front wheels, and, in case of a four-wheel drive vehicle, a loss of the capacity of the front driving axle to transmit driving torque to the ground, with the possibility of wheel slip.
On a downhill road the situation is opposite. The front axle of the vehicle is overloaded, while the rear axles reduce their ground load.
FR2925447 shows a solution for those vehicles provided with a battery pack.

<u>Summary of the invention</u>

The aim of the present invention is to overcome all the drawbacks set forth above and to provide a method for limiting such effects on the tractors provided with load or ballast, and in particular on the ballast tractors intended to pull exceptional transport trailers.
The object of the present invention is a method for balancing the loads on an industrial vehicle, according to claim 1.
The method provides a forward shift of the ballast or of the load when the tractor travels on an uphill load and a backward shift of the ballast or of the load when the tractor travels on a downhill road. The terms forward and backward refer to the forward and backward travelling direction of the tractor. Such ballast shift compensates at least partially the effect of the road slope which provokes the modification of the distribution of the loads on the axles, namely which generates a load shifting.
Another aim of the present invention is to provide a device for balancing the loads on the axles of a vehicle, that can be applied for shifting a ballast and/or of a carried load comprising
means for the embodiment of the aforementioned method. As a consequence, it is also object of the present invention an industrial vehicle having wheels and comprising the aforementioned device for balancing the loads on the wheels.
An improved application of the invention relates to the tractors intended to pull trailers and in particular exceptional transport trailers.
The definition of the ballast shift according to the present invention, takes into account the effect of the trailer acting on the tractor by means of the coupling bar. In this way it is possible to obtain a vehicle whose behaviour on a slope is analogous to its behaviour on a flat ground, thus guaranteeing a more uniform behaviour. As regards the four-wheel drive vehicles, this solution allows to maintain the traction uniformly distributed between the front and the rear axles, since the ground loads are kept constant and consequently the traction capacity of the different axles is not modified.
A vehicle that, without changing the overall mass, allows to vary the position of its centre of gravity by virtue of the shift of one of its parts having a significant mass, may provide particular operating conditions that are particularly useful.
For example, in rear-wheel drive vehicles, a ballast shift may be useful to improve the pickup of the vehicle. Thus, increasing the ground load on the rear driving axles ensures a higher capacity of transmitting the driving torque to the ground.

Also, considering the dynamic effects of the shift of such mass/load and considering the respective speed and acceleration in relation to the vehicle, it is possible to use the inertia forces connected to the ballast/load in order to compensate the inertial forces acting on the whole vehicle.

For example, during the braking of a vehicle, the inertia forces provoke an overloading of the front axle and a reduction of the load on the rear axle. If the ballast is displaced towards the rear part of the vehicle with an appropriate relative acceleration between ballast and vehicle, it would be possible to counteract the effect of the load shift thanks to the inertia forces deriving from the relative motion of the ballast. Thus the behaviour of the vehicle improves and avoids any possible slip of the rear wheels.

Analogously, according to another alternative embodiment of the present invention, the ballast may be shifted laterally when driving on a high-speed bend in order to reduce the effect of the lateral inertia and to ensure a higher stability of the vehicle against lateral tilt.

In general, the inertia forces generated by the action of an actuator that shifts the load or the ballast with respect of the vehicle may be such to compensate the inertia forces acting on the vehicle due to a variation of its motion with respect to a rectilinear uniform motion.

According to the present invention, the method concerns tractor vehicles with semitrailers. The load compensation of the axles is made by shifting the semitrailer coupling with the tractor. Actually in the tractors pulling semitrailers the ballast is formed by the portion of the semitrailer load weighing on the semitrailer coupling.

According to a further alternative embodiment, the tractor may be equipped both of a movable ballast, when it is used for pulling a trailer, and of a movable semitrailer coupling, when it is used for pulling a semitrailer (double-use tractor).

The claims are an integral part of the present description.

Brief description of the Figures

Further purposes and advantages of the present invention will become clear from the following detailed description of a preferred embodiment (and its alternative embodiments) and the drawings that are attached hereto, which are merely illustrative and non-limitative, in which:

- figure 1 schematically shows a ballast tractor to which a trailer placed on a flat surface is connected;
- figure 2 shows the same configuration as the previous figure illustrated on an inclined plane;
- figure 3 shows a block diagram of the steps of a preferred embodiment of the method that is object of the present invention;

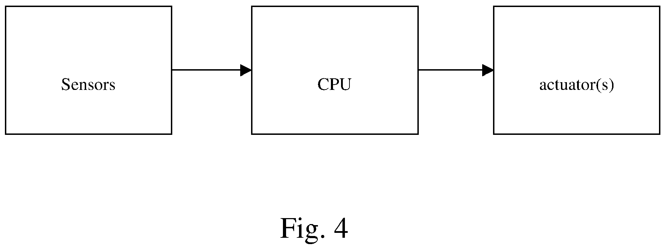

- figure 4 shows a diagram of the balancing device according to the present invention.

In the figures the same reference numbers and letters identify the same elements or components.

Detailed description of preferred embodiments of the invention

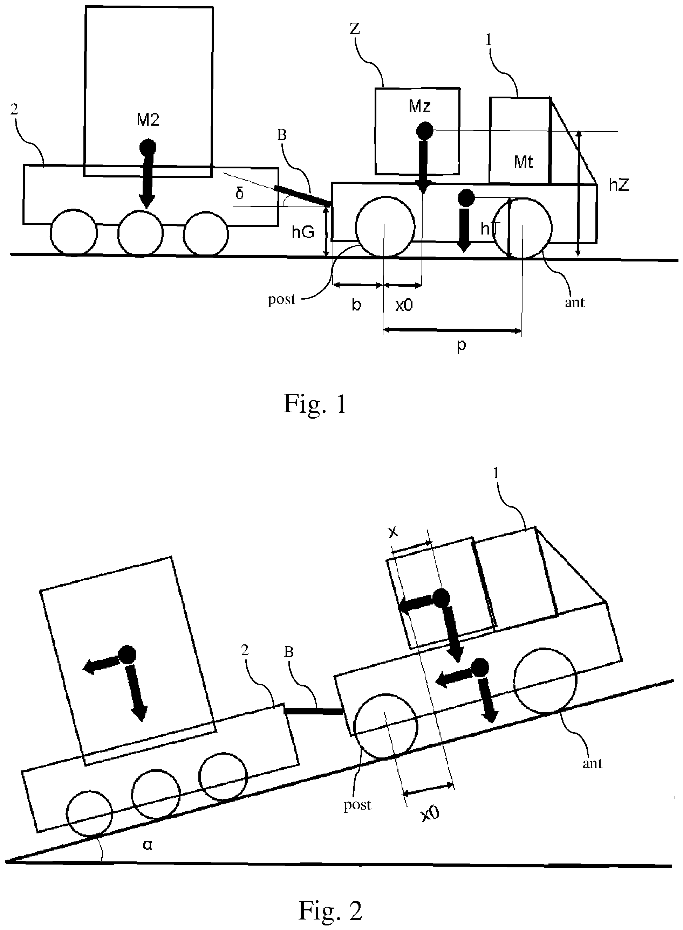

With reference to figure 1, a preliminary step is provided wherein the following parameters relating to a configuration of trailer connected to the tractor on a flat surface (horizontal) are defined, acquired or calculated:

Mz = mass of the movable ballast [kg]
Mt = mass of the empty tractor [kg]
M1 = Mz + Mt = overall mass of the tractor 1 [kg]
M2 = overall mass of the trailer 2 [kg]
g = acceleration of gravity=9,81 m/s^2
$\alpha$ = slope of the road (positive when uphill) [deg]
hT = centre of gravity height of the empty tractor 1 [mm]
hZ = centre of gravity height of the ballast on the tractor 1 with respect to the ground [mm]
hG = hitch height [mm]
p = wheel base of the tractor [mm]
x0 = initial position of the centre of gravity of the ballast on a flat road defined in terms of distance from the rear axle [mm]; such position is also called reference position of the ballast or load Z,
x = position of the ballast with respect to the initial position on a flat road defined by x0 (positive towards the front axle [mm]), such position is also called balancing position of the loads on the tractor 1 axles,
$\delta$ = angle of the coupling bar tractor-trailer with respect to the horizontal axle of the tractor (positive if the connection to the trailer is on an upper position with respect to the connection to the tractor) [deg]

b = horizontal distance between hitch and second axle of the tractor [mm].

Thus the method according to the present invention provides a preliminary step according to which it is necessary to gather the necessary information for determining the initial position x0 of the ballast in order to obtain the desired distribution of the static loads on a flat road.

After that, the ballast shift with respect to the initial position x0 is determined for controlling the balancing device that is object of the present invention.

The intervention law connects the magnitudes defined in the preliminary step with the ones measured during the operating step. The result is a ballast shift with respect to the initial position determined with the vehicle being stationary on a flat road.

The ballast shift is calculated for balancing the load transfer due to the weight of the trailer, to the weight of the tractor (ballast and empty tractor) and to the inclination of the drawbar connected to the hitch. For example figure 2 shows that the load/ballast is forward shifted while the vehicle travels on a positive slope, namely an uphill slope.

The following magnitudes are defined:

$P_{ant}$ = overall load weighing on the front axle ant [N]
$P_{post}$ = overall load weighing on the rear axle post [N]
$PT_{ant}$ = static load of the tare weighing on the front axle ant [N]
$PT_{post}$ = static load of the tare weighing on the rear axle post [N]

The following calculations are performed:

$$P_{ant} = PT_{ant}*cos(\alpha) + Mz*g*cos(\alpha)*(x0+x)/p - DR \qquad (1)$$

$$P_{post} = PT_{post}*cos(\alpha) + Mz*g*cos(\alpha)*(p-x0-x)/p + DR \qquad (2)$$

where DR is the load transfer [mm], between front and rear axles of the vehicle, due to a slope different from zero of the road where the vehicle travels.

The load transfer DR, due to the road slope and representing the variation of the weights acting on the front and rear axle of the vehicle with respect to the static situation on a flat road, may be calculated by means of the following expression obtained from the decomposition of the forces acting along directions that are parallel and perpendicular to the road where the vehicle is travelling:

$$DR = Mz*g*sen(\alpha)*hZ/p + Mt*g*sen(\alpha)*hT/p + M2*g*sen(\alpha)*hG/p$$
$$+ M2*g*sen(\alpha)*tan(\delta)*(1-2*b/p) \qquad (3)$$

where:

| | |
|---|---|
| $Mz*g*sen(\alpha)*hZ/p$ | is the load transfer deriving from the ballast mass due to the road slope |
| $Mt*g*sen(\alpha)*hT/p$ | is the load transfer deriving from the mass of the tare of the vehicle due to the road slope |
| $M2*g*sen(\alpha)*hG/p$ | is the load transfer deriving from the thrust of the trailer generated by its mass (horizontal component) |
| $M2*g*sen(\alpha)*tan(\delta)*(1-2*b/p)$ | is the load transfer due to the vertical component of the thrust of the trailer |

The shift x of the ballast/load is calculated in order to nullify the load transfer DR by means of the following equation:

$$Mz*g*cos(\alpha)*x/p-DR=0 \qquad (4)$$

Thus it is possible to leave the loads on the vehicle axles unchanged with respect to the configuration on a flat road, compensating the load transfer due to the road slope by means of the shift of the centre of gravity of the ballast/load.

From the formula (4) if is possible to obtain the intervention law of the balancing device:

$$x = DR/(Mz*g* \cos(\alpha)) \hspace{3cm} (5)$$

The present description neglects, for the sake of simplicity, the drag and the rolling resistance forces of the wheels of the trailer.

By means of a real time measurement of the road slope $\alpha$ it is possible to calculate, using the intervention law, namely the equation (5), the shift that is necessary to balance the load transfer DR. The calculated shift is provided to the actuation system of the balancing device. The actuation system is controlled by a control of the position of the ballast. It applies such a force that the position error, namely the difference between the position of the ballast calculated by means of the equation (5) and a current position is nullified.

The current position of the ballast may be measured in real time by a feedback control or it may be implicitly determined by using step by step motors and a respective open chain control.

It can be clearly observed from the equation (3) that the mass of the trailer affects the load transfer.

If the trailer is not connected to the tractor, for example because it is temporarily disconnected or because its connection is not provided, M2 is equal to 0 and consequently the equation (3) is simplified.

This situation may define a second alternative embodiment of the present invention where, instead of shifting a ballast, the load itself that is transported by the vehicle is shifted.

An intermediate situation with respect to the previous ones is defined when the tractor pulls a semitrailer.

In this case two different situations are possible:

- the ballast is not present, then the balancing device intervenes by a forward or backward shift of the semitrailer coupling. In other words, the semitrailer is moved nearer to or away from the tractor according to what is needed. In particular, the portion of load of the semitrailer weighing on the semitrailer coupling is considered as ballast;
- a ballast is present and the balancing device intervenes by shifting, at the same time or one after the other, both the semitrailer coupling and the ballast.

In case a ballast or a load is (are) present, the load balancing device may act in order to balance the vehicle during bends.

In this case the lateral load transfer, which modifies the distribution of the loads between the wheels on left side and on right side of the vehicle, may be determined by considering the centrifugal force of the different masses.

Such force depends on the bend radius and on the speed of the vehicle and on the bending angle of the bend. A theoretical description is omitted, since it can be derived from the one given in relation to the slope variation.

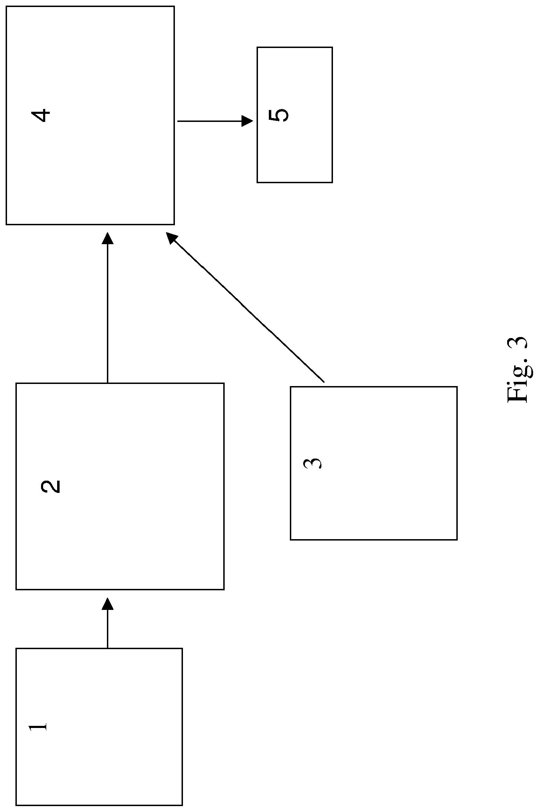

As regards the functioning of the device, figure 3 shows a block diagram of the method implemented by the device.

- At step 1 the preliminary data for calculating the initial position x0 of the ballast or load Z are uploaded in the device, in order to obtain a desired distribution of the static loads on a flat road;
- at step 2 the slope of the road (or its bending) is acquired and a shift x of the ballast or load Z from the initial position x0 are calculated in order to compensate a load transfer DR generated by such slope (or bending);
- at step 3 the current position of the ballast or load Z with respect to the initial position is acquired (optional);
- at step 4 a position error between the current position of the ballast or load Z with respect to shift x is calculated;
- at step 5 at least an actuator is controlled in order to bring the load or ballast in the position x that compensated the load transfer.

According to a preferred alternative embodiment of the invention, the balancing device comprises its own measurement means (sensors) and calculation and control means (CPU) in order to implement the aforementioned steps.

According to another alternative embodiment of the invention, the calculation and control means (CPU) are connected to or are implemented by the vehicle control unit, which may already provide the data that are usually available for other electronic systems of the vehicle.

The road slope may be obtained by direct measures, by means of bubble devices or cartography, or indirectly by means of load cells in correspondence of each wheel.

The vehicle speed can be usually acquired by the means of the vehicle CAN network, while the bending of the road may be indirectly obtained by accelerometers, for example the ones of the airbags, or directly obtained by cartography.

The present invention may advantageously be realized by means of a computer program, which comprises program code means performing one or more steps of said method, when said program is run on a computer. For this reason the scope of the present patent is meant to cover also said computer program and the computer-readable means that comprises a recorded message, such computer-readable means comprising the program code means for performing one or more steps of such method, when such program is run on a computer.

It will be apparent to the person skilled in the art that other alternative embodiments of the invention can be conceived and reduced to practice without departing from the scope of the invention as defined by the appended claims.

From the description set forth above it will be possible for the person skilled in the art to embody the invention with no need of describing further construction details.

## Claims

1. Method for balancing the loads on the wheels of an industrial vehicle, the industrial vehicle comprising at least a front axle (ant) and a rear axle (post), a loading platform and a transported load and/or ballast (Z) slidably associated with the loading platform of the vehicle, with a reciprocal position that can be controlled by at least an actuator; the method comprising the step of calculating the load transfer (DR) between the wheels of the vehicle, due to the road slope, with respect to an initial condition of load distribution, on a flat road, and the step of balancing such load transfer (DR) with a shift (x) of the load or ballast (Z) restoring said initial condition, wherein the vehicle has a longitudinal development defining a forward and backward direction, the method comprising

   - a step of forward shifting, according to said longitudinal development, said load or ballast (Z) when the slope ($\alpha$) of a road where the vehicle travels has a positive value and
   - a step of backward shifting, according to said longitudinal development, said load or ballast (Z) when the slope ($\alpha$) of a road where the vehicle travels has a negative value **characterised in that** said vehicle (1, 2) comprises a tractor (1) for semitrailer equipped with a semitrailer coupling and a semitrailer (2), and wherein an actuator acts on said semitrailer coupling and wherein said load or ballast (Z) is defined by a portion of the semitrailer load weighing on the tractor (1).

2. Method according to claim 1, wherein a ballast is present and the method comprises intervening by shifting, at the same time or one after the other, both the semitrailer coupling and the ballast.

3. Method according to claim 1, comprising a preliminary step (step 1) of calculating an initial position (x0) of said load or ballast in said initial condition of load distribution wherein said slope is equal to zero.

4. Method according to claim 3, comprising a further preliminary step (step 3) of acquiring the slope of the road and of calculating a shift (x) of the ballast or load (Z) from the initial position (x0) in order to compensate said load transfer (DR) consequent to such slope ($\alpha$).

5. Method according to one of the previous claims, further comprising the step (step 3) of acquiring a current position of the load or ballast (Z) with respect to the initial position (x0).

6. Method according to one of the previous claims, further comprising the steps (step 4) of calculating a position error between the current position of the load or ballast (Z) with respect to said shift (x) and (step 5) of controlling at least an actuator in order to determine said shift of the load or ballast (Z) which restores said initial condition.

7. Method according to claim 1, wherein the vehicle has a longitudinal development which defines a lateral direction with respect to said longitudinal development, the method comprising a step of lateral shifting said load or ballast (Z), towards a side concordant with the bending of the road where the vehicle travels.

8. Method according to claim 7, wherein the lateral load transfer (DR) is determined by the centrifugal force acting on the masses of the vehicle as a function of the bending of the road and of the speed of the vehicle.

9. Method according to claim 8, comprising a further preliminary step (step 2) of acquiring the bending of the road and the speed of the vehicle and of calculating a shift (x) of the ballast or of the load (Z) from the initial position (x0) in order to compensate said load transfer (DR) consequent to such bending ($\alpha$).

10. Method according to one of the claims from 7 to 9, further comprising the step (step 3) of acquiring a current position of the load or ballast (Z) with respect to the initial position (x0).

11. Method according to one of the claims from 7 to 10, further comprising the steps (step 4) of calculating a position error between the current position of the load or ballast (Z) with respect to said shift (x) and (step 5) of controlling at least an actuator in order to determine said shift of the load or ballast (Z) which restores said initial condition.

12. Method according to one of the previous claims, wherein the inertia forces generated by the action of said actuator on said load or ballast (Z) are such that they compensate the inertia forces acting on the vehicle due to a variation of its motion with respect to a rectilinear uniform motion.

13. Device for balancing the loads on the wheels of an industrial vehicle, the industrial vehicle comprising at least a front axle (ant) and a rear axle (post), a loading platform and a transported load and/or ballast (Z) slidably associated with the loading platform of the vehicle, with a reciprocal position that can be controlled by at least an actuator; the device comprising

- means for measuring a load transfer (DR) between the wheels of the vehicle with respect to an initial condition of load distribution;
- means for measuring a current position of the load or ballast (Z) with respect to a reference position (x0);
- actuation means suitable to shift said load or ballast (Z) with respect to said loading platform;
- means for calculating a balancing position (x) of the load or ballast, due to the road slope, which restores said initial condition of load distribution, on a flat road,
- means for controlling said actuation means configured for controlling the load or ballast shift (Z) in said balancing position (x).

wherein the vehicle has a longitudinal development defining a forward and backward direction, and said means for controlling said actuation means are configured for

- forward shifting, according to said longitudinal development, said load or ballast (Z) when the slope ($\alpha$) of a road where the vehicle travels has a positive value and
- backward shifting, according to said longitudinal development, said load or ballast (Z) when the slope ($\alpha$) of a road where the vehicle travels has a negative value **characterised in that** said vehicle (1, 2) comprises a tractor (1) for semitrailer equipped with a semitrailer coupling and a semitrailer (2), and wherein said actuator acts on said semitrailer coupling and wherein said load or ballast (Z) is defined by a portion of the semitrailer load weighing on the tractor (1).

14. Device according to claim 13, wherein a ballast is present and the device intervenes by shifting, at the same time or one after the other, both the semitrailer coupling and the ballast.

15. Device according to one of claims 13 or 14, wherein said calculation, control and actuation means are configured in order to implement all the steps of the method according to any of the claims from 1 to 12.

16. Industrial vehicle comprising a device for balancing the loads of the wheels according to one of the claims 13 to 15.

17. Computer program comprising program code means suitable for performing the steps of any claim from 1 to 12, when such program is run on a computer.

18. Computer-readable means comprising a recorded program, said computer-readable means comprising program code means suitable for performing the steps according to the claims from 1 to 12, when said program is run on a computer.

**Patentansprüche**

1. Verfahren zum Ausgleichen der Lasten auf den Rädern eines Nutzfahrzeugs, wobei das Nutzfahrzeug mindestens eine Vorderachse (ant) und eine Hinterachse (post), eine Ladefläche und eine Transportlast und/oder Ballast (Z), die verschiebbar mit der Ladefläche des Fahrzeugs verbunden sind, mit einer gegenseitigen Lage, die mindestens durch einen Aktor gesteuert werden kann, enthält; wobei das Verfahren den Schritt des Berechnens der Lastübertragung (DR) zwischen den Rädern des Fahrzeugs aufgrund der Fahrbahnneigung in Bezug auf eine Ausgangsbedingung der Lastverteilung auf einer ebenen Straße umfasst und der Schritt des Ausgleichens einer solchen Lastübertragung (DR) mit einem Verschieben (x) der Last oder des Ballasts (Z) die Ausgangsbedingung wiederherstellt, wobei das Fahrzeug eine Längsausdehnung besitzt, die eine Vorwärtsrichtung und eine Rückwärtsrichtung definiert, und das Verfahren Folgendes umfasst:

EP 2 607 159 B1

- einen Schritt des Vorwärtsschiebens der Last oder des Ballasts (Z) entsprechend der Längsausdehnung dann, wenn die Neigung ($\alpha$) einer Straße, auf der das Fahrzeug fährt, einen positiven Wert besitzt; und
- einen Schritt des Rückwärtsschiebens der Last oder des Ballasts (Z) entsprechend der Längsausdehnung dann, wenn die Neigung ($\alpha$) einer Straße, auf der das Fahrzeug fährt, einen negativen Wert besitzt,

**dadurch gekennzeichnet, dass**
das Fahrzeug (1, 2) eine Zugmaschine (1) für einen Sattelanhänger, die mit einer Sattelanhängerkupplung ausgestattet ist, und einen Sattelanhänger (2) umfasst, wobei ein Aktor auf die Sattelanhängerkupplung wirkt und die Last oder der Ballast (Z) durch den Teil der Sattelanhängerlast, die auf der Zugmaschine (1) lastet, definiert ist.

2. Verfahren nach Anspruch 1, wobei ein Ballast vorhanden ist und das Verfahren ein Eingreifen durch gleichzeitiges oder aufeinanderfolgendes Verschieben sowohl der Sattelanhängerkupplung als auch des Ballasts umfasst.

3. Verfahren nach Anspruch 1, das einen vorläufigen Schritt (Schritt 1) des Berechnens einer Ausgangsposition (x0) der Last oder des Ballasts in der Ausgangsbedingung der Lastverteilung umfasst, wobei die Neigung gleich Null ist.

4. Verfahren nach Anspruch 3, das einen weiteren vorläufigen Schritt (Schritt 3) des Erfassens der Neigung der Straße und des Berechnens einer Verschiebung (x) des Ballasts oder der Last (Z) von der Ausgangsposition (x0) umfasst, um die sich aus der Neigung ($\alpha$) ergebende Lastübertragung (DR) auszugleichen.

5. Verfahren nach einem der vorhergehenden Ansprüche, das ferner den Schritt (Schritt 3) des Erfassens einer Ist-Position der Last oder des Ballasts (Z) in Bezug auf die Ausgangsposition (x0) umfasst

6. Verfahren nach einem der vorhergehenden Ansprüche, das ferner die Schritte (Schritt 4) des Berechnens eines Positionsfehlers zwischen der Ist-Position der Last oder des Ballasts (Z) in Bezug auf die Verschiebung (x) und (Schritt 5) des Steuerns mindestens eines Aktors, um die Verschiebung der Last oder des Ballasts (Z), die den Ausgangszustand wiederherstellt, zu bestimmen, umfasst.

7. Verfahren nach Anspruch 1, wobei das Fahrzeug eine Längsausdehnung besitzt, die eine Querrichtung in Bezug auf die Längsausdehnung definiert und das Verfahren einen Schritt des seitlichen Verschiebens der Last oder des Ballasts (Z) zu einer Seite, die mit der Biegung der Straße, auf der das Fahrzeug fährt, übereinstimmt.

8. Verfahren nach Anspruch 7, wobei die seitliche Lastübertragung (DR) durch die Zentrifugalkraft, die auf die Massen des Fahrzeugs wirkt, als eine Funktion der Biegung der Straße und der Geschwindigkeit des Fahrzeugs bestimmt wird.

9. Verfahren nach Anspruch 8, das einen weiteren vorläufigen Schritt (Schritt 2) des Erfassens der Biegung der Straße und der Geschwindigkeit des Fahrzeugs und des Berechnens der Verschiebung (x) des Ballasts oder der Last (Z) von der Ausgangsposition (x0) umfasst, um die Ladungsverschiebung (DR), die sich aus einer derartigen Biegung ($\alpha$) ergibt, auszugleichen.

10. Verfahren nach einem der Ansprüche 7 bis 9, das ferner den Schritt (Schritt 3) des Erfassens einer Ist-Position der Last oder des Ballasts (Z) in Bezug auf die Ausgangsposition (x0) umfasst.

11. Verfahren nach einem der Ansprüche 7 bis 10, das ferner den Schritt (Schritt 4) des Berechnens eines Positionsfehlers zwischen der Ist-Position der Last oder des Ballasts (Z) in Bezug auf die Verschiebung (x) und (Schritt 5) des Steuerns mindestens eines Aktors umfasst, um die Verschiebung der Last oder des Ballasts (Z), die die Ausgangsbedingung wiederherstellt, zu bestimmen.

12. Verfahren nach einem der vorhergehenden Ansprüche, wobei die Trägheitskräfte, die durch die Einwirkung des Aktors auf die Last oder den Ballast (Z) erzeugt werden, derart sind, dass sie die Trägheitskräfte, die auf das Fahrzeug aufgrund einer Schwankung seiner Bewegung in Bezug auf eine geradlinige, gleichförmige Bewegung wirken, kompensieren.

13. Einrichtung zum Ausgleichen der Lasten auf den Rädern eines Nutzfahrzeugs, wobei das Nutzfahrzeug mindestens eine Vorderachse (ant) und eine Hinterachse (post), eine Ladefläche und eine Transportlast und/oder Ballast (Z), die verschiebbar mit der Ladefläche des Fahrzeugs verbunden sind, mit einer gegenseitigen Lage, die mindestens durch einen Aktor gesteuert werden kann, enthält; wobei

die Einrichtung Folgendes enthält:

- ein Mittel zum Messen einer Lastübertragung (DR) zwischen den Rädern des Fahrzeugs in Bezug auf eine Ausgangsbedingung der Lastverteilung;
- ein Mittel zum Messen der Ist-Position der Last oder des Ballasts (Z) in Bezug auf eine Referenzposition (x0);
- ein Betätigungsmittel, das geeignet ist, die Last oder den Ballast (Z) in Bezug auf die Ladefläche zu verschieben;
- ein Mittel zum Berechnen einer Ausgleichsposition (x) der Last oder des Ballasts aufgrund der Fahrbahnneigung, die die Ausgangsbedingung der Lastverteilung auf einer ebenen Straße wiederherstellt, und
- ein Mittel zum Steuern des Betätigungsmittels, das konfiguriert ist, die Verschiebung der Last oder des Ballasts (Z) zur Ausgleichsposition (x) zu verschieben, wobei

das Fahrzeug eine Längsausdehnung besitzt, die eine Vorwärtsrichtung und eine Rückwärtsrichtung definiert und das Mittel zum Steuern des Betätigungsmittels konfiguriert ist, zum

- Vorwärtsschieben der Last oder des Ballasts (Z) entsprechend der Längsausdehnung dann, wenn die Neigung ($\alpha$) einer Straße, auf der das Fahrzeug fährt, einen positiven Wert besitzt; und
- Rückwärtsschieben der Last oder des Ballasts (Z) entsprechend der Längsausdehnung dann, wenn die Neigung ($\alpha$) einer Straße, auf der das Fahrzeug fährt, einen negativen Wert besitzt,

**dadurch gekennzeichnet, dass**
das Fahrzeug (1, 2) eine Zugmaschine (1) für einen Sattelanhänger, die mit einer Sattelanhängerkupplung ausgestattet ist, und einen Sattelanhänger (2) umfasst, wobei der Aktor auf die Sattelanhängerkupplung wirkt und die Last oder der Ballast (Z) durch den Teil der Sattelanhängerlast, die auf der Zugmaschine (1) lastet, definiert ist.

**14.** Einrichtung nach Anspruch 13, wobei ein Ballast vorhanden ist und die Einrichtung durch gleichzeitiges oder aufeinanderfolgendes Verschieben sowohl der Sattelanhängerkupplung als auch des Ballasts eingreift.

**15.** Einrichtung nach einem der Ansprüche 13 oder 14, wobei das Berechnungsmittel, das Steuermittel und das Betätigungsmittel konfiguriert sind, alle Schritte des Verfahrens nach einem der Ansprüche 1 bis 12 zu implementieren.

**16.** Nutzfahrzeug, das eine Einrichtung zum Ausgleichen der Lasten auf den Rädern nach einem der Ansprüche 13 bis 15 enthält.

**17.** Computerprogramm, das Programmcodemittel enthält, die geeignet sind, die Schritte nach einem der Ansprüche 1 bis 12 durchzuführen, wenn ein derartiges Programm auf einem Computer ausgeführt wird.

**18.** Computerlesbares Mittel, das ein aufgezeichnetes Programm enthält, wobei das computerlesbare Mittel Programmcodemittel enthält, die geeignet sind, die Schritte nach einem der Ansprüche 1 bis 12 durchzuführen, wenn das Programm auf einem Computer ausgeführt wird.

**Revendications**

**1.** Procédé pour équilibrer les charges sur les roues d'un véhicule industriel, le véhicule industriel comprenant au moins un essieu avant (ant) et un essieu arrière (post), une plateforme de chargement et une charge et/ou un ballast (Z) transportés associés de manière coulissante à la plateforme de chargement du véhicule, avec une position réciproque qui peut être commandée par au moins un actionneur ;
le procédé comprenant l'étape de calcul du transfert de charge (DR) entre les roues du véhicule, en raison de l'inclinaison de la route, par rapport à un état initial de distribution de charge, sur une route à plat, et l'étape d'équilibrage d'un tel transfert de charge (DR) avec un décalage (x) de la charge ou du ballast (Z) rétablissement ledit état initial, dans lequel le véhicule a un développement longitudinal définissant une direction vers l'avant et vers l'arrière, le procédé comprenant

- une étape de décalage vers l'avant, selon ledit développement longitudinal, de ladite charge ou dudit ballast (Z) quand l'inclinaison ($\alpha$) d'une route où le véhicule se déplace a une valeur positive et
- une étape de décalage vers l'arrière, selon ledit développement longitudinal, de ladite charge ou dudit ballast (Z) quand l'inclinaison ($\alpha$) d'une route où le véhicule se déplace a une valeur négative

EP 2 607 159 B1

**caractérisé en ce que**
ledit véhicule (1, 2) comprend un tracteur (1) pour semi-remorque équipé d'un organe d'accouplement de semi-remorque et un semi-remorque (2), et dans lequel un actionneur agit sur ledit organe d'accouplement de semi-remorque et dans lequel ladite charge ou ledit ballast (Z) est défini par une portion de la charge de semi-remorque pesant sur le tracteur (1).

2. Procédé selon la revendication 1, dans lequel un ballast est présent et le procédé comprend l'intervention par décalage, en même temps ou l'un après l'autre, de l'organe d'accouplement de semi-remorque et du ballast.

3. Procédé selon la revendication 1, comprenant une étape préliminaire (étape 1) de calcul d'une position initiale (x0) de ladite charge ou dudit ballast dans ladite condition initiale de distribution de charge dans lequel ladite inclinaison est égale à zéro.

4. Procédé selon la revendication 3, comprenant une étape préliminaire supplémentaire (étape 3) d'acquisition de la pente de la route et de calcul d'un décalage (x) du ballast ou de la charge (Z) à parti de la position initiale (x0) afin de compenser ledit transfert de charge (DR) à la suite d'une telle inclinaison ($\alpha$).

5. Procédé selon une des revendications précédentes, comprenant en outre l'étape (étape 3) d'acquisition d'une position actuelle de la charge ou du ballast (Z) par rapport à la position initiale (x0).

6. Procédé selon une des revendications précédentes, comprenant en outre les étapes (étape 4) de calcul d'une erreur de position entre la position actuelle de la charge ou du ballast (Z) par rapport audit décalage (x) et (étape 5) de commande d'au moins un actionneur afin de déterminer ledit décalage de la charge ou du ballast (Z) qui rétablit ledit état initial.

7. Procédé selon la revendication 1, dans lequel le véhicule a un développement longitudinal qui définit une direction latérale par rapport audit développement longitudinal, le procédé comprenant une étape de décalage latéral de ladite charge ou dudit ballast (Z), vers un côté concordant avec la courbure de la route où le véhicule se déplace.

8. Procédé selon la revendication 7, dans lequel le transfert de charge (DR) latéral est déterminé par la force centrifuge agissant sur les masses du véhicule selon la courbure de la route et de la vitesse du véhicule.

9. Procédé selon la revendication 8, comprenant une étape préliminaire supplémentaire (étape 2) d'acquisition de la courbure de la route et de la vitesse du véhicule et de calcul d'un décalage (x) du ballast ou de la charge (Z) à partir de la position initiale (x0) afin de compenser ledit transfert de charge (DR) à la suite d'une telle courbure ($\alpha$).

10. Procédé selon une des revendications 7 à 9, comprenant en outre l'étape (étape 3) d'acquisition d'une position actuelle de la charge ou du ballast (Z) par rapport à la position initiale (x0).

11. Procédé selon une des revendications 7 à 10, comprenant en outre les étapes (étape 4) de calcul d'une erreur de position entre la position actuelle de la charge ou du ballast (Z) par rapport audit décalage (x) et (étape 5) de commande d'au moins un actionneur afin de déterminer ledit décalage de la charge ou du ballast (Z) qui rétablir ledit état initial.

12. Procédé selon une des revendications précédentes, dans lequel les forces d'inertie générées par l'action dudit actionneur sur ladite charge ou ledit ballast (Z) sont telles qu'elles compensent les forces d'inertie agissant sur le véhicule en raison d'une variation de son mouvement par rapport à un mouvement uniforme rectiligne.

13. Dispositif pour équilibrer les charges sur les roues d'un véhicule industriel, le véhicule industriel comprenant au moins un essieu avant (ant) et un essieu arrière (post), une plateforme de chargement et une charge et/ou un ballast (Z) transportés associés de manière coulissante à la plateforme de chargement du véhicule, avec une position réciproque qui peut être commandée par au moins un actionneur ;
le dispositif comprenant

   - un moyen pour mesurer un transfert de charge (DR) entre les roues du véhicule par rapport à un état initial de distribution de charge ;
   - un moyen pour mesurer une position actuelle de la charge ou du ballast (Z) par rapport à une position de référence (x0) ;

- un moyen d'actionnement approprié pour décaler ladite charge ou ledit ballast (Z) par rapport à ladite plateforme de chargement ;
- un moyen pour calculer une position d'équilibrage (x) de la charge ou du ballast, en raison de l'inclinaison de la route, qui rétablit ledit état initial de distribution de charge, sur une route à plat,
- un moyen pour commander ledit moyen d'actionnement configuré pour commander le décalage de charge ou de ballast (Z) dans ladite position d'équilibrage (x),

dans lequel le véhicule a un développement longitudinal définissant une direction vers l'avant et vers l'arrière, et ledit moyen pour commander ledit moyen d'actionnement est configuré pour

- décaler vers l'avant, selon ledit développement longitudinal, ladite charge ou ledit ballast (Z) lorsque l'inclinaison ($\alpha$) d'une route où le véhicule se déplace a une valeur positive et
- décaler vers l'arrière, selon ledit développement longitudinal, ladite charge ou ledit ballast (Z) lorsque l'inclinaison ($\alpha$) d'une route où le véhicule se déplace a une valeur négative

**caractérisé en ce que**
ledit véhicule (1, 2) comprend un tracteur (1) pour semi-remorque équipé d'un organe d'accouplement de semi-remorque et un semi-remorque (2), et dans lequel un actionneur agit sur ledit organe d'accouplement de semi-remorque et dans lequel ladite charge ou ledit ballast (Z) est défini par une portion de la charge de semi-remorque pesant sur le tracteur (1).

14. Dispositif selon la revendication 13, dans lequel un ballast est présent et le dispositif intervient en décalant, en même temps ou l'un après l'autre, l'organe d'accouplement de semi-remorque et le ballast.

15. Dispositif selon une des revendications 13 ou 14, dans lequel lesdits moyens de calcul, de commande et d'actionnement sont configurés afin de mettre en oeuvre toutes les étapes du procédé selon l'une quelconque des revendications de 1 à 12.

16. Véhicule industriel comprenant un dispositif pour équilibrer les charges des roues selon une des revendications 13 à 15.

17. Programme informatique comprenant un moyen de code de programme approprié pour effectuer les étapes selon l'une quelconque des revendications 1 à 12, quand un tel programme est exécuté sur un ordinateur.

18. Moyen lisible sur ordinateur comprenant un programme enregistré, ledit moyen lisible sur ordinateur comprenant un moyen de code de programme approprié pour effectuer les étapes selon les revendications de 1 à 12, quand ledit programme est exécuté sur un ordinateur.

Fig. 1

Fig. 2

Fig. 3

EP 2 607 159 B1

Fig. 4

Sensors

CPU

actuator(s)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2925447